## Europäisches Patentamt
## European Patent Office
## Office européen des brevets

(11) Veröffentlichungsnummer: **0 173 224**
**B1**

---

(12) **EUROPÄISCHE PATENTSCHRIFT**

---

(45) Veröffentlichungstag der Patentschrift: 29.03.89

(21) Anmeldenummer: 85110425.7

(22) Anmeldetag: 20.08.85

(51) Int. Cl.⁴: **A 01 F 12/44**, A 01 D 41/12

---

(54) Mähdrescher.

---

(30) Priorität: 29.08.84 US 646349

(43) Veröffentlichungstag der Anmeldung:
05.03.86 Patentblatt 86/10

(45) Bekanntmachung des Hinweises auf die Patenterteilung:
29.03.89 Patentblatt 89/13

(84) Benannte Vertragsstaaten:
BE DE FR GB IT

(56) Entgegenhaltungen:
CA-A-1 166 112
DE-A-2 503 693
DE-A-3 303 952
US-A-4 408 618

(73) Patentinhaber: **DEERE & COMPANY, 1 John Deere Road, Moline Illinois 61265 (US)**

(72) Erfinder: **Hall, James William, 3280 Quail Ridge, Bettendorf Iowa 52722 (US)**
Erfinder: **Popelier, Maurice Alois, 7615 36th Avenue, Moline Illinois 61265 (US)**

(74) Vertreter: **Feldmann, Bernhard, DEERE & COMPANY European Office, Patent Department Steubenstrasse 36- 42 Postfach 503, D-6800 Mannheim 1 (DE)**

---

## Beschreibung

Die Erfindung bezieht sich auf einen Mähdrescher mit einer Erntebergungsvorrichtung und einer nach dem Axialflußprinzip arbeitenden, mindestens eine vordere Einlaßöffnung und eine hintere Auslaßöffnung aufweisenden Trennvorrichtung, die aus zwei nebeneinander angeordneten Trenngehäusen mit je einem drehbar gelagerten Rotor gebildet ist, von denen jeder eine Welle mit zahlreichen umlaufenden Fingern aufweist, so daß das Erntegut in einer Matte entlang der Innenoberfläche der Trenngehäuse zur Auslaßöffnung spiralförmig entlang bewegt wird und das Erntegut über die Einlaßöffnung einem am vorderen Ende der Trennvorrichtung vorgesehenen Einzugsgehäuseteil, in den sich der jeweilige Rotor erstreckt, aufgegeben wird, der aus halb- oder etwa halbzylinderförmigen Seitenwänden und mindestens einer quer verlaufenden vorderen Wand gebildet ist.

Es ist bereits ein Mähdrescher bekannt (US-A-4 408 618), der mit einem nach dem Axialflußprinzip arbeitenden Trennteil ausgerüstet ist, der aus zwei parallel zueinander verlaufenden, zylindrisch ausgebildeten Trenngehäusen besteht, in dem je eine Trommel angeordnet ist. Eine jede Trommel weist eine sich durch das Gehäuse der Trommel erstreckende, teilweise koaxial ausgebildete Welle auf, auf der Finger drehbar und oszillierend gelagert sind, so daß sie je nach Stellung des Rotors unterschiedlich stark in das Erntegut eingreifen und dieses spiralförmig an der Gehäuseinnenwand des Trennteiles entlang bewegen, um es dann der Auslaßöffnung zuzuführen. Der Boden des Trenngehäuses weist zahlreiche Durchlaßöffnungen auf, durch die das Erntegut abgeschieden werden kann. Er besteht aus zwei zylinderförmigen Halbschalen, die das Trommelgehäuse umgeben. Das Erntegut wird von oben her durch eine im Trenngehäuse vorgesehene Einlaßöffnung den Rotoren zugeführt und von diesen dann erfaßt.

Da die Halbschalen mit ihren jeweiligen sich in Längsrichtung erstreckenden Kanten bis an die horizontale Mittelebene des Rotors herangeführt sind, steht zur Aufnahme des Erntegutes zwischen den Halbschalen und den in gleicher Richtung angetriebenen Rotoren ein relativ kleiner Spalt zur Verfügung, über den das Erntegut in das Rotorgehäuse eingezogen werden kann, so daß es zu Verstopfungen kommen kann.

Ferner ist ein Maisschäler bekannt (US-A-3 536 077), der zwei nebeneinander parallel verlaufende, nach dem Axialflußprinzip arbeitende Rotoren aufweist, auf denen schneckenförmig verlaufende Förderleisten und sich radial nach außen erstreckende Finger vorgesehen sind. Die Rotoren sind jeweils von einem zylinderförmigen Sieb vollständig umgeben und werden stirnseitig über eine quer verlaufende Förderschnecke beschickt. Da das Erntegut stirnseitig direkt den Rotoren einzeln aufgegeben wird, entsteht bei der Umlenkung des Erntegutes von einer geradlinigen in eine spiralförmige Bewegung leicht ein Gutstau.

Demgegenüber liegt der Erfindung die Aufgabe zugrunde, den Einzugsbereich der Trennvorrichtung derart auszubilden und anzuordnen, daß eine einwandfreie Aufnahme und Weiterführung des Erntegutes mittels der Rotoren möglich ist, ohne daß im Einzugsbereich der Rotoren Verstopfungen auftreten. Diese Aufgabe ist dadurch gelöst worden, daß im Einzugsgehäuseteil die beiden Rotoren in einem gemeinsamen Raum angeordnet sind, der aus halb oder etwa Zylinderförmigen, die beiden Rotoren umgebenden Seitenwänden, aus einem durchgehenden Boden, der quer verlaufenden vorderen Wand sowie der das Erntegut in zwei Gut-Ströme aufteilenden, quer verlaufenden hinteren Wand gebildet ist, wobei der Boden gemeinsam mit den Rotoren eine zwischen den Rotoren liegende Förderzone bildet, in die das Erntegut durch die gegenläufig antreibbaren Rotoren gefördert wird und aus der es den beiden nebeneinander liegenden, separaten Trenngehäusen getrennt zugeführt wird. Durch die vorteilhafte Ausbildung und Anordnung des Einzugsgehäuseteils sowie den vorteilhaften Antrieb der Rotoren mit den zugehörigen Fingern wird eine einwandfreie Aufnahme des Erntegutes gewährleistet und sichergestellt, daß das Erntegut ohne großen Widerstand zwischen die beiden Rotoren gelangt, da hierzu ein entsprechender Freiraum zwischen den Rotoren vorgesehen ist, der eine zügige Aufnahme des ankommenden Erntegutes gewährleistet. Aus dieser Zone zwischen den beiden Rotoren wird das Gut dann ohne weiteres von den Fingern allmählich erfaßt und spiralförmig durch die sich anschließenden Trenngehäuse geleitet, die hierzu am Ende des Einzugsgehäuseteiles eine quer verlaufende Wand aufweisen, über die der Gutstrom in zwei gleiche Gutströme aufgeteilt wird, so daß beide Gehäuse der Trennvorrichtung gleichmäßig beaufschlagt werden können. Hierzu ist es gemäß der Erfindung vorteilhaft, daß die Einlaßöffnung durch zwei sich in Axialrichtung des Rotors erstreckende obere Kanten der Seitenwände und zwei obere Kanten der quer verlaufenden Wände gebildet ist, die derart mit Abstand zueinander angeordnet sind, daß das Erntegut mittels der intermittierend arbeitenden Finger zwichen die Rotoren in die Förderzone radial von oben her eingegeben und dann spiralförmig den Trenngehäusen zugeführt wird, und daß der stromaufwärts liegende Einzugsgehäuseteil aus zwei in etwa halbkreisförmigen aneinander anstoßenden Zylindern gebildet ist, die über den horizontal verlaufenden Boden verbunden sind. Bei einem Mähdrescher, bei dem jeder Rotor aus einer Kurbelwelle, die einen koaxialen Teil und einem gegenüber diesem radial versetzten Fingeraufnahmeteil aufweist, und aus einem Mitnehmerteil besteht, wobei der Fingeraufnahmeteil die Finger aufweist, die auf dem Fingeraufnahmeteil drehbar und in einem Winkel gegenüber der Radialrichtung ausgerichtet sind, und auf dem koaxialen Teil der Mitnehmerteil drehbar angeordnet ist und zur Führung der Finger dient, der Fingeraufnahmeteil eines jeden Rotors im Bereich des Einzugsgehäuseteiles exzentrisch verläuft und das Erntegut von den Fingern nur für einen bestimmten Zeitabschnitt erfaßt wird, in dem das Erntegut stromabwärts gefördert wird. Durch die vorteilhafte Ausbildung der Einlaßöffnung wird das Erntegut zwangsweise in den zwischen den beiden Rotoren gebildeten Spalt geleitet, von den Fingern erfaßt und dann in die zwischen den Rotoren gebildete Förderzone ohne große Umlenkung geleitet, um dann spiralförmig weiter transportiert zu werden. Durch den exzentrischen Verlauf der Fingeraufnahmeteile der Finger ist auch der Rotationskreis der Finger im Einzugsgehäuseteil exzentrisch verlaufend angeordnet, so daß hierdurch eine Steuerung der Finger möglich ist und somit der Freiraum zwischen den beiden Rotationskreisen der Finger im Einzugsgehäuseteil So gestaltet werden kann, daß das Erntegut auf einfache Weise ohne großen Widerstand zwischen die gegenläufig angeordneten Rotoren gelangt und somit auf den horizontal verlaufenden Boden abgelegt und allmählich von den Fingern vollständig erfaßt werden kann. Die Finger sind dazu so gesteuert, daß sie im Bereich des Bodens am tiefsten in das Erntegut eingreifen und somit den Weitertransport des Erntegutes über den Boden und dann an der zylinderförmigen Gehäusewand des Trenngehäuses entlang gewährleisten. Um einen Spiralförmigen Transport des Erntegutes in Auslaßrichtung des Trenngehäuses zu gewährleisten, ist es vorteilhaft, daß die Fingerspitzen der Finger im Bereich des Erntegutaufnahmeteiles eine schräg gestellte Kreisebene überstreichen und das Erntegut intermittierend stromabwärts fördern und daß die Exzentrizität der Fingeraufnahmenteile der Rotoren im Einzugsgehäuseteil in Richtung des zwischen den Rotoren liegenden Zwischenraumes bzw. der Förderzone verläuft und die beiden Rotationskreise der Fingerspitzen mit Bezug auf die Längsachse der Rotoren schräg verlaufen und dicht nebeneinander liegen. Da die Finger durch die Exzentrizität der Fingeraufnahmeteile in Richtung des zwischen den Rotoren liegenden Zwischenraumes bzw. der Förderzone verlaufen, greifen die Zinken im Bereich des zwischen den Rotoren liegenden Spaltes zur Aufnahme des Erntegutes allmählich ein, wobei sie ihre größte Eintauchtiefe in das Erntegut im Bereich des Bodens aufweisen. Hierdurch wird ein Stau des Erntegutes zwischen den Rotoren im Einzugsgehäuseteil vermieden, da die Zinken den Bewegungsfluß des Erntegutes nicht stören, insbesondere wenn die Zinken noch keine Förderwirkung auf das Erntegut ausüben können. Der Transport des Erntegutes in Axialrichtung kann dadurch unterstützt werden, daß an der Innenwand des Einzugsgehäuseteiles sich axial erstreckende, als Leitelemente ausgebildete Rippen vorgesehen sind.

In weiterer Ausgestaltung der Erfindung ist es vorteilhaft, daß die Fingeraufnahmenteile im Einzugsgehauseteil mit Bezug auf die Fingeraufnahmeteile der Rotoren im Trennteil derart radial versetzt angeordnet sind, daß der Abstand der Fingeraufnahmenteile im Einzugsgehauseteil kleiner ist als der Abstand der Fingeraufnahmenteile im Trennteil. Vorteilhaft ist es ferner, daß beide Fingeraufnahmeteile der Rotoren im Einzugsgehäuseteil und im Trennteil jeweils zum Gehäuseteil exzentrisch angeordnet sind und daß jeweils die gegenüberliegenden Seitenwände des Einzugsgehäuseteiles über einen gewölbten Boden verbunden sind. Durch die unterschiedliche Exzentrizität der beiden Fingeraufnahmeteile im Einzugsgehäuseteil und im Trennteil wird gewährleistet, daß das Erntegut ohne weiteres in den Spalt zwischen die beiden Rotoren gelangt, wenn es die Einlaßöffnung passiert hat. Je dichter die beiden Rotationskreise der Finger im Einzugsgehäuseteil aneinander herangeführt sind bzw. sich überlappen, je größer ist auch die Aggressivität der Finger auf das Erntegut. Jedoch ist dabei zu beachten, daß die beiden Rotationskreise sich nicht in der Weise überlappen, daß sie für die Aufnahme des Erntegutes in den Spalt zwischen den Rotoren ein Hindernis darstellen. Dabei ist es auch möglich, daß die jeweils in das Erntegut einwirkenden Finger wechselseitig in das Erntegut eingreifen, um somit den Fluß des Gutstromes zu unterstützen und den Reibungswiderstand zwischen den Fingern und dem Erntegutstrom so klein wie möglich zu halten.

In weiterer Ausgestaltung der Erfindung ist es vorteilhaft, daß der Durchmesser des Einzugsgehäuseteiles gleich dem Durchmesser des Gehäuses der Trennvorrichtung ist und die Seitenwände von Einzugsgehäuseteil und Trennvorrichtung durchgehend ausgebildet sind. Dabei ist es außerdem vorteilhaft, daß die Breite der Einlaßöffnung in etwa gleich dem Abstand zwischen den Fingeraufnahmeteilen der Rotoren im Einzugsgehäuseteil ist. Ferner ist es möglich, die einzelnen Rotationskreise des Einzugsgehäuse- und Trennteiles unterschiedlich auszubilden. Es ist beispielsweise möglich, daß der Durchmesser des Rotationskreises der Fingerspitzen im Einzugsgehäuseteil größer ist als der Durchmesser des Rotationskreises in der Trennvorrichtung bzw. umgekehrt. Um eine gute Aufteilung des Erntegutstromes im Bereich der Einlaßöffnung der Trenngehäuse zur Aufnahme der beiden Rotoren vorteilhaft zu gestalten, ist es vorteilhaft, daß die am stromabwärts liegenden Ende vorgesehene, den Einzugsgehäuseteil von der Trennvorrichtung abteilende Wand rechtwinklig und quer zu den Achsen der Rotoren angeordnet ist und daß die hintere quer verlaufende Wand zwei den zylinderförmig ausgebildeten Wänden angepaßte Ausschnitte aufweist.

Da das Erntegut im Einzugsgehäuseteil noch nicht so stark verdichtet ist, ist es vorteilhaft, daß der Durchmesser des Einzugsgehäuseteiles größer ist als der Durchmesser des Gehäuses des Trennteiles. Vorteilhaft ist es ferner, daß der Rotationskreis der Finger im Bereich des Trennteiles dicht über dem Boden liegt bzw. tangential an diesen angrenzt, während der Rotationskreis der Finger im Einzugsgehäuseteil des einen Rotors an den Rotationskreis des anderen Rotors tangential angrenzt oder diesen etwas überlappt. Um eine einwandfreie Führung des Erntegutes zu ermöglichen, nachdem es in den Spalt zwischen die beiden Rotoren aufgenommen ist, ist es vorteilhaft, daß der Boden zwischen den Rotationskreisen der Finger eine Erhebung aufweist, deren rechter und linker Abschnitt einen kurvenförmigen Verlauf mit einem Kurvenradius aufweist, der etwas größer ist als der Radius des entsprechenden Rotationskreises. Dabei können die Rotationskreise der Finger im Einzugsgehäuseteil einen größeren Abstand aufweisen als Rotationskreise im Trennteil.

Im folgenden wird die Erfindung anhand von mehrere Ausführungsbeispiele darstellenden Zeichnungen näher erläutert. Es zeigt:

Fig. 1  eine schematische Darstellung eines Mähdreschers in Seitenansicht mit einer nach dem Axialflußprinzip arbeitenden Trennvorrichtung, die hinter einer mit Bezug auf die Fahrtrichtung des Mähdreschers quer verlaufenden Dreschtrommel angeordnet ist,

Fig. 2  eine perspektivische Darstellung eines Dreschkorbes mit Dreschtrommel und der zugehörigen Trennvorrichtung,

Fig. 3  einen Schnitt entlang der Linie 3 - 3 gemäß Fig. 2,

Fig. 4  eine Teilansicht des Einzugsbereiches der Trennvorrichtung, wobei Teile zur besseren Darstellung weggelassen sind,

Fig. 5a  eine Teilansicht des vorderen Bereichs der Trennvorrichtung mit den zugehörigen Förderelementen,

Fig. 5b  eine schematische Darstellung in der Ansicht entlang der Linie 5b - 5b gemäß Fig. 3 sowie die Bewegung eines Fingers der Förderelemente gemäß Fig. 5a,

Fig. 5c  die Bewegungsbahn eines Fingers im Einzugsbereich gemäß Fig. 5a,

Fig. 6  eine Frontansicht der Trennvorrichtung,

Fig. 7  eine schematische Darstellung des vorderen Teiles der Trennvorrichtung, wobei der vordere Bereich bzw. der Einzugsbereich und das dazugehörige Gehäuse einen größeren Durchmesser aufweisen als der sich daran anschließende Teil des Gehäuses zur Aufnahme der Trennvorrichtung,

Fig. 8  eine Ansicht entlang der Linie 8 - 8 gemäß Fig. 4 eines weiteren Ausführungsbeispieles, wobei sich im Bereich der Einzugszone die Förderelemente überlappen.

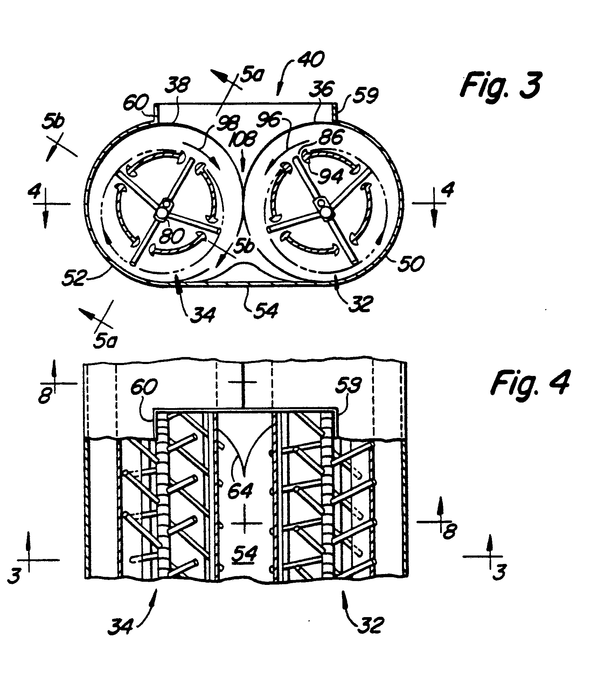

In der Zeichnung ist mit 10 ein Gehäuse eines Mähdreschers bezeichnet, das mit zwei vorderen Laufrädern 12 und zwei hinteren steuerbaren Laufrädern 14 ausgerüstet ist. An der Stirnseite des Gehäuses befindet sich eine Erntebergungs-Vorrichtung 16 zur Aufnahme des Erntegutes, das an ein Schrägfördergehäuse 18 angeschlossen ist, über die das Erntegut einer mit Bezug auf die Fahrtrichtung des Mähdreschers quer verlaufenden Dreschtrommel 20 und einem Dreschkorb 22 zugeführt wird. Hinter dem Dreschkorb 22 befindet sich eine Strohleittrommel 24, die mit einem unterhalb der Strohleittrommel 24 vorgesehenen, am Dreschkorb 22 angeschlossenen Fingerrechen 26 (siehe Fig. 2) zusammenwirkt. Über die Strohleittrommel 24 gelangt das Erntegut von oben her zur Trennvorrichtung 28, die sich mit Bezug auf die Fahrtrichtung des Mähdreschers in Längsrichtung erstreckt. Unterhalb der Trennvorrichtung 28 befindet sich eine Reinigungsvorrichtung, die jedoch der Einfachheit halber nicht veranschaulicht ist. Im folgenden ist der Hinweis "links" und "rechts" mit Bezug auf eine Bedienungsperson angegeben, die hinter dem Mähdrescher steht und nach vorne schaut.

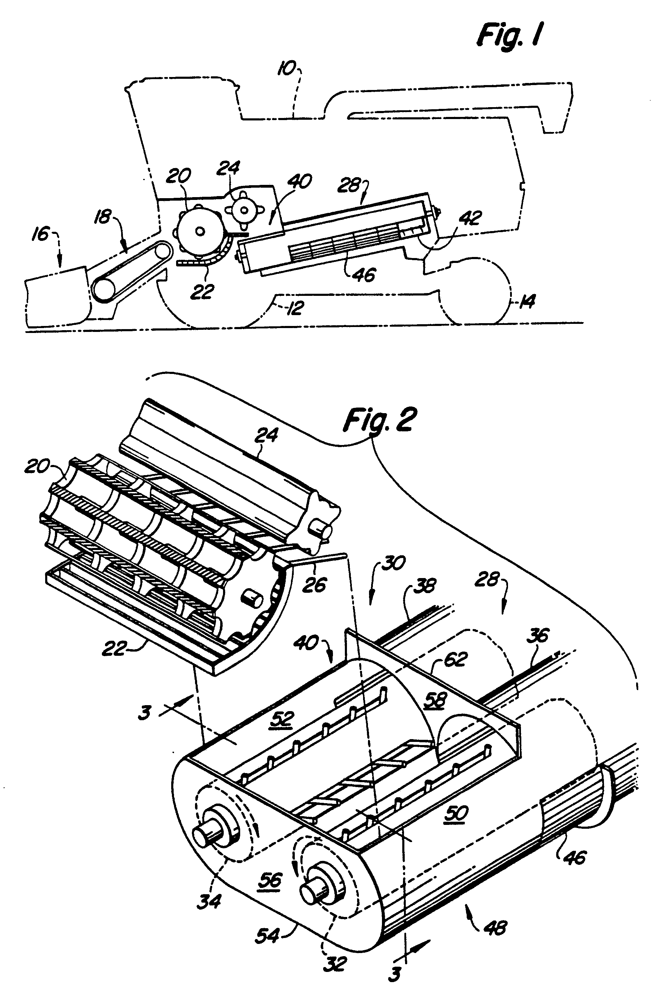

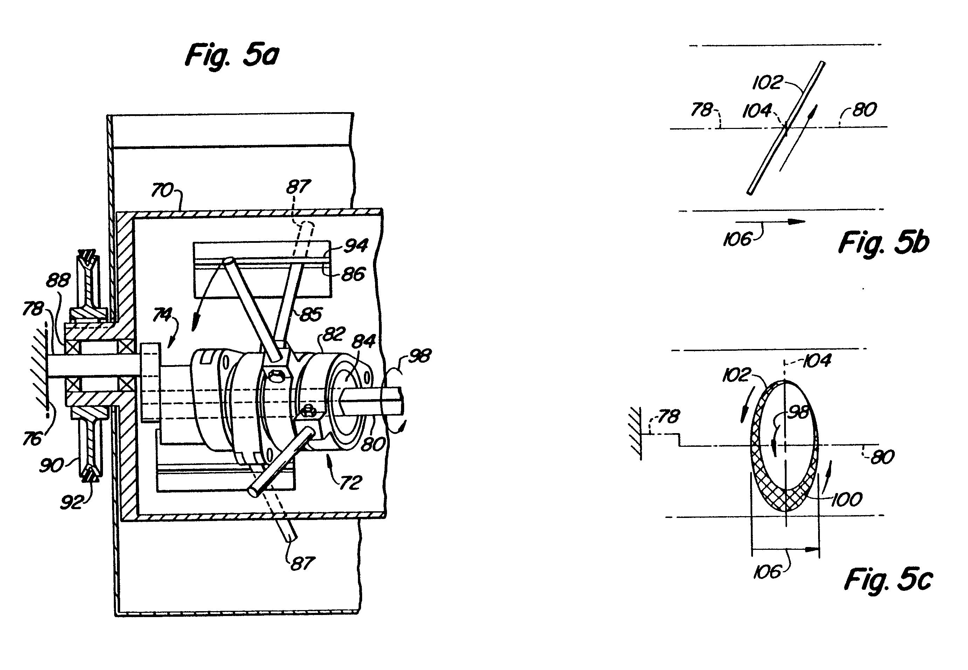

Die Trennvorrichtung ist im Detail in den Figuren 1 bis 4 näher veranschaulicht und weist zwei sich in Axialrichtung erstreckende nebeneinander parallel verlaufende Rotoren 32 und 34 auf. Das Prinzip der Wirkungsweise der beiden Rotoren 32 und 34 ist in den Figuren 5b und 5c angedeutet.

Die Trennvorrichtung 28 ist mit einem Trenngehäuse 30 ausgerüstet, das weitgehend aus einem Blechmantel gebildet ist und in dem die beiden Rotoren 32 und 34 nebeneinander drehbar gelagert sind. Das Gehäuse bzw. die Grundform des Gehäuses besteht aus zwei länglichen, hohlförmigen Zylinderteilen 36 und 38, deren vorderer Wandteil im vorderen Bereich hinter der Strohleittrommel 24 weggeschnitten ist und dadurch eine Einzugszone bzw. rechteckförmige Einlaßöffnung 40 bildet. Ein jeder Gehäuseteil bzw. Zylinderteil 36 und 38 weist stromabwärts je eine Auslaßöffnung 42 auf, wobei in den Zeichnungen lediglich die linke Auslaßöffnung 42 (siehe Fig. 1) dargestellt ist. Über die Auslaßöffnungen 42 wird das ausgedroschene Stroh ausgeschieden, während das getrennte Erntegut bzw. die Körner durch die in den Zylinderteilen vorgesehenen Öffnungen 46 ausgeschieden werden und zu einer nicht dargestellten Reinigungsvorrichtung gelangen.

Der Einzugsgehäuseteil 48 des Trenngehäuses 30 hat die Form eines nach oben hin offenen Behälters mit linken und rechten mit Abstand zueinander angeordneten Seitenwänden 50 und 52, die aufgrund des die Einlaßöffnung 40 bildenden Ausschnittes in etwa halbkreisförmig ausgebildet sind und in einen Boden 54 tangential übergehen. Das vordere und hintere Ende des Einzugsgehäuseteiles 48 wird durch je eine quer verlaufende vordere und hintere Wand 56, 58 begrenzt. Somit bilden die Seitenwände 50, 52, die Wände 56, 58 und der Boden 54 den Einzugsgehäuseteil 48. Im Bereich der Strohleittrommel 24 können Leitelemente vorgesehen sein, die den Fördervorgang des Erntegutes von der Strohleittrommel 24 zur rechteckförmigen Einlaßöffnung 40 unterstützen. Um die Aufnahme des Erntegutes in der Einlaßöffnung 40 zu erleichtern, ist die quer verlaufende Wand 58 nach oben mit einem Verlängerungsteil 62 ausgestattet. Ebenso können auch die Seitenwände 50 und 52 mit je einem vertikal verlaufenden Verlängerungsteil 59 und 60 ausgerüstet sein. Die quer verlaufende Wand 58 mit ihren in etwa kreisförmigen Ausschnitten umgibt die obere Hälfte der beiden Zylinderteile 36 und 38. Ein symmetrisch ausgerichtetes Zwischenstück 64 zwischen dem Boden 54 und der zugehörigen Wand 50 und 52 unterteilt die beiden Zylinderteile 36 und 38 (siehe Fig. 4).

Die besondere Ausgestaltung des Rotors 32 bzw. 34 ist in Fig. 5a veranschaulicht. In Fig. 5a ist das vordere Ende des rechten Rotors 34 dargestellt. Da der linke Rotor 32 gleich dem Rotor 34 ist, jedoch mit einer gegenläufigen Anordnung der Finger, ist dieser nicht nochmals dargestellt. Der Rotor 34 besteht aus einem Trommelgehäuse 70, in dem zahlreiche Förderelemente 72 angeordnet und auf einer Kurbelwelle 74 befestigt sind. Die Kurbelwelle ist in Rahmenteilen 76 des Gehäuses 10 des Mähdreschers drehfest gelagert (siehe Fig. 5a). Die Kurbelwelle 74 besteht aus einem koaxialen vorderen Teil 78, der in dem Rahmenteil 76 gelagert ist, und einem Fingeraufnahmeteil 80. Der Teil 78 ist koaxial bzw. konzentrisch zum Zylinderteil 36 bzw. 38 ausgerichtet. An den Teil 78 schließt sich der Fingeraufnahmeteil 80 an, der mit Bezug auf die Vertikalebene nach unten und, seitlich um 30° versetzt ist. Jedes Förderelement 72 ist mit einer Nabe 82 ausgerüstet, die auf einem Lagerblock 84 schräg angeordnet ist und einen sich radial erstreckenden Finger 85 aufweist. Der Lagerblock 84 ist auf dem Fingeraufnahmeteil 80 bzw. auf der Welle drehfest angeordnet. Ein jeder Finger 85 weist eine Fingerspitze 87 auf, die sich durch eine Schlitzöffnung 86 im Trommelgehäuse 70 erstreckt. Das Trommelgehäuse 70 weist endseitig Lager 88 auf, die beispielsweise als Wälzlager ausgebildet sein können und die auf dem Teil 78 der Kurbelwelle angeordnet sind. Auf der linken Seite (Fig. 5a) des Trommelgehäuses 70 befindet sich auf einem die Lager 88 aufnehmenden Flansch eine Keilriemenscheibe 90, die über einen Keilriemen 92 antreibbar ist und somit das Trommelgehäuse 70 antreibt. Die Kanten der Schlitzöffnungen 86 können mittels einer Platte 94 geschützt sein. Die Drehrichtung des Trommelgehäuses 70 und der Förderelemente 72 ist durch die Pfeile 96 und 98 angedeutet (siehe Fig. 3). Das über die Erntebergungsvorrichtung 16 aufgenommene Erntegut wird nach Passieren der Strohleittrommel 24 in die Einlaßöffnung 40 abgegeben, so daß daraufhin die Förderelemente 72 das Erntegut erfassen.

Die Umfangsgeschwindigkeit der Finger 85 ist so gewählt, daß ein ständiger Kontakt der Finger mit dem Erntegut sowie ein ständiger Kontakt des Erntegutes mit der Seitenwand 52 bzw. 50 des Zylinderteiles 36 bzw. 38 unter Zuhilfenahme der Zentrifugalkräfte aufrechterhalten wird. Die äußere Oberfläche des Trommelgehäuses 70 hat auf die Zentrifugalkräfte ebenso eine Einwirkung. Die exzentrische Anordnung der Finger 85 mit Bezug auf den Zylinderteil 36 und 38 bewirkt eine ständige unterschiedliche Einwirkung auf die Erntegutmatte. Die periodische Kontaktaufnahme der Finger 85 mit dem Erntegut sowie die periodische Herausnahme der Finger 85 aus der Erntegutmatte wird durch entsprechende Ausbildung und Anordnung des Trommelgehäuses 70 mit den zugehörigen Fingern in den Zylinderteilen 36 bzw. 38 erreicht. Hierdurch ist es möglich, daß zumindest für einen kurzen Zeitabschnitt ein jeder Finger 85 in das Trommelgehäuse 70 eingezogen wird, ohne daß er an der Oberfläche des Trommelgehäuses heraussteht. Die Bewegungsfläche 100, die ein Finger überstreicht, ist in Fig. 5c veran-Schaulicht, wobei die innere Ellipse in etwa der Oberfläche des Trommelgehäuses 70 und die äußere Ellipse 102 der Bewegungsbahn der Fingerspitzen 87 entspricht.

Der axiale Transport des Erntegutes hängt also von der Einwirkung der Finger 85 auf das Erntegut ab. Die Rotationsebene der Finger 85 bzw. der Fingerspitzen 87 muß so sein, daß das Erntegut stromabwärts bewegt wird. Hierzu ist es erforderlich, daß der Finger 85 zumindest über einen Winkelbereich von 180° mit dem Erntegut in Kontakt steht. Die gegenläufige Bewegung der Trommelgehäuse 70 mit den zugehörigen Fingern 85 ist durch die Pfeile 96 und 98 gemäß Fig. 3 angedeutet.

Der Fingeraufnahmeteil bzw. die Welle 80 ist im vorliegenden Ausführungsbeispiel mit Bezug auf die Vertikalebene, die durch die Mittelachse des Trommelgehäuses 70 verläuft, nach unten und außen mit einem Winkel von 30° gekröpft. Dabei ist es vorteilhaft, daß in dieser Stellung die Fingerspitzen 87 am weitesten in das Erntegut hineinreichen (siehe Fig. 3). Die Bewegungsfläche 100 (siehe Fig. 5c), die durch die Finger 85 überstrichen wird, verläuft dabei rechtwinklig zur Welle 80 (siehe Fig. 5c).

Blickt man nun auf die Bewegungsfläche 100, und zwar von der Seite her auf das Trommelgehäuse 70 im Bereich der maximalen Kontaktaufnahme des Erntegutes mit den Fingern 85, so ist die Bewegungsfläche 100 gemäß Fig. 5c stromabwärts geneigt. Das heißt, die Bewegungsebene bzw. die zugehörigen Finger 85 drehen sich um eine Achse 104, die in einer durch die Kurbelwelle 74 gebildeten Ebene liegt, die rechtwinklig zur Längsachse bzw. Welle 80 verläuft, so daß durch die seitliche Bewegung der Finger 85 (gemäß Pfeil 106) das Erntegut auf diese Weise stromabwärts bewegt wird.

Das Erntegut wird normalerweise über die Strohleittrommel 24 in die Einlaßöffnung 40 abgegeben. Die durch die Wände 56 und 58 gebildete Einlaßöffnung befindet sich oberhalb des Totpunktes des Trommelgehäuses 70, so daß das Erntegut mittels der Rotoren 32 und 34 erfaßt wird und dann gemäß Fig. 3 in den Spalt 108 geleitet wird. Der Kontakt der Fingerspitzen mit dem Erntegut wird infolge der Exzentrizität der Drehachse der Finger mit Bezug auf die Drehachse des Trommelgehäuses 70 vergrößert. Nachdem das Erntegut den Spalt 108 passiert hat, wirken die Finger 85 infolge der Einzugswirkung auf das Erntegut immer stärker ein und teilen den Erntegutfluß mittels des Bodens 54 und der Wand 64 in zwei Gutströme auf. Danach wirkt ein jeder Rotor 32, 34 mit den entsprechenden Fingern 85 auf das Erntegut ein und fördert das Erntegut spiralförmig stromabwärts in eine Zone, in der das Erntegut am wirkungsvollsten und mit größter Geschwindigkeit weiterbewegt wird. Das Erntegut bewegt sich dabei in Form einer Spirale durch das Gehäuse.

Die Umfangskräfte und die hierdurch resultierende Bewegung des Erntegutes setzen sich auch in den oberen äußeren Quadranten des Zylinderteiles 36 und 38 fort, obwohl, wie aus Fig. 3 hervorgeht, die Einwirkung der Finger 85 auf das Erntegut in diesem Bereich geringer ist und somit auch der axiale Bewegungsimpuls. Jedoch bleibt die stromabwärts gerichtete Bewegung nach einer Umdrehung erhalten.

Ein großer Teil des aufgenommenen Erntegutes wird stromabwärts geleitet und in das stromaufwärts liegende Ende des Zylinderteiles 36 und 38 in etwa nach einer Umdrehung der Rotoren 32 und 34 bewegt. Das Erntegut, das im Bereich der Einlaßöffnung 40 verharrt bzw. in diesem Bereich weiterbewegt wird, vermischt sich mit dem nachfolgenden eintretenden Erntegut, so daß der Greifeffekt der beiden Rotoren 32 und 34 und somit der Einzug des Erntegutes in den Spalt 108 wirkungsvoll unterstützt wird. Somit wird eine gleichmäßige Beaufschlagung der Zylinderteile 36 und 38 mit Erntegut und ferner eine fortlaufende Trennung bzw. Abscheidung des Korns aus den Ähren bewirkt.

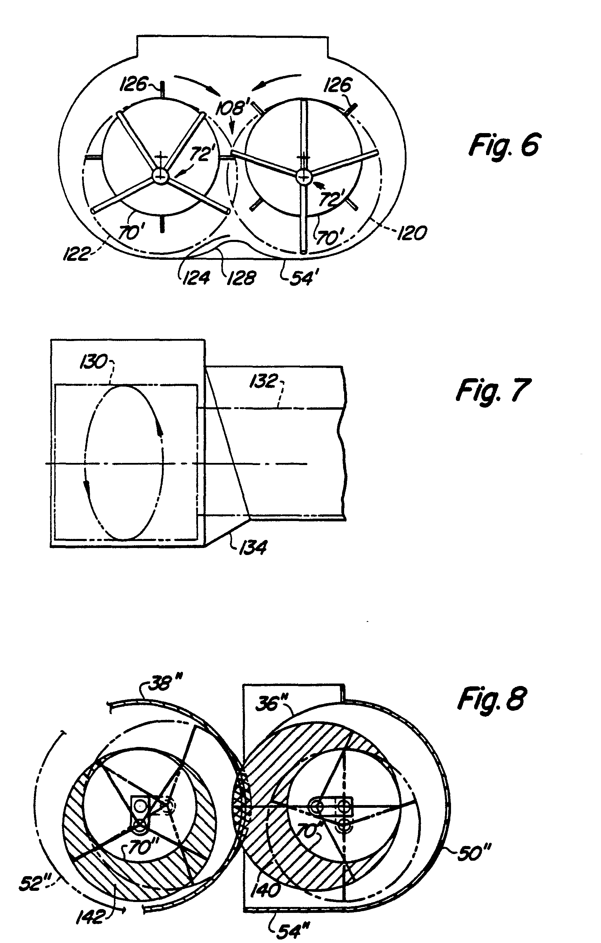

Der Wirkungsgrad zur Aufnahme des Erntegutes in der Einlaßöffnung 40 kann dadurch vergrößert werden, daß der Überlappungsbereich der Rotationskreise 120 und 122 der Fingerspitzen 87 vergrößert wird (siehe Fig. 6). Bei dieser Anordnung ist die Drehachse der Förderelemente 72' mit Bezug auf den Teil 78 des Trommelgehäuses 70' vertikal nach unten versetzt. Der Achsabstand der Rotorteile zur Aufnahme des Erntegutes im Einzugsgehäuseteil 48 ist kleiner als der Durchmesser des Rotationskreises 120, 122, so daß die beiden Rotationskreise 120, 122 sich im Bereich des Spaltes 108' schneiden. Hierdurch wird die Aggressivität der Fingerspitzen 87 im Bereich des Spaltes 108' und im Bereich der Förderzone 124 vergrößert. Die Aggressivität bzw. der Einzug des Erntegutes mittels der Rotoren 32, 34 kann ebenfalls vergrößert werden, wenn in Längsrichtung des Trommelgehäuses 70 Förderblätter 126 auf der Oberfläche des Trommelgehäuses 70' vorgesehen werden. Ein Wulst bzw. eine Erhebung 128 auf dem Boden 54' im Bereich der Förderzone 124 (siehe Fig. 6) trägt ferner zur Aufteilung des Erntegutes mittels der Rotoren 32, 34 in diesem Bereich bei.

Im Ausführungsbeispiel gemäß Fig. 7 sind die Finger 85 und somit der Rotationskreis 130 im Einzugsbereich größer als die Finger 85 und somit der Rotationskreis 132 im anschließenden Trennteil, so daß zwischen dem Aufnahmeteil und dem Trennteil die Verbindung mittels einer Schute 134 hergestellt werden muß.

Im Ausführungsbeispiel gemäß Fig. 8 sind die Achsen des Trommelgehäuses 70'' im Aufnahmebereich und im Trennteil koaxial zueinander ausgerichtet; jedoch ist die Achse für die Finger im Trennteil nach unten gekröpft, während die Achse für die Finger im Einzugsgehäuseteil schräg nach innen gekröpft ist, um somit den Überlappungsbereich zu vergrößern, wie dies in Fig. 8 dargestellt ist. Die Ausbildung des Trenngehäuses 30 gemäß Fig. 8 ist in etwa ähnlich dem Trenngehäuse gemäß Fig. 2. Somit sind auch die Seitenwände 50'' und 52'', an die sich ein Boden 54'' anschließt zylinderförmig ausgebildet, und der Aufnahmeteil bzw. Einzugsgehäuseteil 48 schließt sich tangential an die beiden konzentrisch zueinander verlaufenden Zylinderteile 36'', 38'' an. Der Einzugsgehäuseteil ist durch die Bezugszahl 140 und der Trennbereich durch die Bezugszahl 142 angedeutet (siehe Fig. 8).

Bei allen Ausführungsbeispielen sind die einzelnen Rotoren derart ausgebildet und angeordnet und mit Führungselementen ausgestattet, daß das Erntegut spiralförmig durch das Trenngehäuse 30, 32 geleitet wird. Die Förderelemente bzw. die Finger 85 sind mit axialem Abstand zueinander angeordnet und beschreiben einen Weg, dessen Drehachse bzw. Rotationskreis exzentrisch zur Achse des Gehäuses verläuft. Die Umfangsgeschwindigkeit ist so gewählt, daß das Erntegut im wesentlichen in einer ringförmigen Matte ständig in Kontakt mit der inneren Wand des Trenngehäuses steht, wobei der Kontakt der Förderelemente mit der Erntegutmatte im Trenngehäuse intermittierend ist (d. h. in einem gewissen Abschnitt werden die Finger periodisch aus dem Erntegut herausgezogen). Bei Kontaktaufnahme der Finger mit dem Erntegut im Trenngehäuse werden die Finger seitlich nach hinten, d. h. stromabwärts, bewegt, so daß das Erntegut spiralförmig durch das Trenngehäuse gefördert wird.

**Patentansprüche**

1. Mähdrescher mit einer Erntebergungsvorrichtung und einer nach dem Axialflußprinzip arbeitenden, mindestens eine vordere Einlaßöffnung (40) und eine hintere Auslaßöffnung (42) aufweisenden Trennvorrichtung (28), die aus zwei nebeneinander angeordneten Trenngehäusen (30) mit je einem drehbar gelagerten Rotor (32, 34) gebildet ist, von denen jeder eine Welle mit zahlreichen umlaufenden Fingern (85) aufweist, so daß das Erntegut in einer Matte entlang der Innenoberfläche der Trenngehäuse (30) zur Auslaßöffnung (42) spiralförmig entlang bewegt wird und das Erntegut über die Einlaßöffnung einem am vorderen Ende der Trennvorrichtung vorgesehenen Einzugsgehäuseteil (48), in den sich der jeweilige Rotor (32, 34) erstreckt, aufgegeben wird, der aus halb- oder etwa halbzylinderförmigen Seitenwänden (50, 52) und mindestens einer quer verlaufenden vorderen Wand (56) gebildet ist, dadurch gekennzeichnet, daß im Einzugsgehäuseteil (48) die beiden Rotoren (32, 34) in einem gemeinsamen Raum angeordnet sind, der aus den halbkreisförmigen, die beiden Rotoren umgebenden Seitenwänden (50, 52), aus einem durchgehenden Boden (54), der quer verlaufenden vorderen Wand (56) sowie der das Erntegut in zwei Gutströme aufteilenden, quer verlaufenden hinteren Wand (58) gebildet ist, wobei der Boden (54) gemeinsam mit den Rotoren eine zwischen den Rotoren liegende Förderzone (124) bildet, in die das Erntegut durch die gegenläufig antreibbaren Rotoren gefördert wird und aus der es den beiden nebeneinander liegenden, separaten Trenngehäusen (30) getrennt zugeführt wird.

2. Mähdrescher nach Anspruch 1, dadurch gekennzeichnet, daß die Einlaßöffnung (40) durch zwei sich in Axialrichtung des Rotors erstreckende obere Kanten (59, 60) der Seitenwände (50, 52) und zwei obere Kanten der quer verlaufenden Wände (56, 58) gebildet ist, die derart mit Abstand zueinander angeordnet sind, daß das Erntegut mittels der intermittierend arbeitenden Finger (85) zwischen die Rotoren (32, 34) in die Förderzone radial von oben her eingegeben und dann spiralförmig den Trenngehäusen (30) zugeführt wird.

3. Mähdrescher nach Anspruch 1 oder 2, dadurch gekennzeichnet, daß der stromaufwärts liegende Einzugsgehäuseteil (48) aus zwei in etwa halbkreisförmigen, aneinander anstoßenden Zylindern gebildet ist, die über den horizontal verlaufenden Boden (54) verbunden sind.

4. Mähdrescher nach einem oder mehreren der vorherigen Ansprüche, wobei jeder Rotor (32, 34) aus einer Kurbelwelle (74), die einen koaxialen Teil (78) und einen gegenüber diesem radial versetzten Fingeraufnahmeteil (80) aufweist, und aus einem Mitnehmerteil (70) besteht, wobei der Fingeraufnahmeteil die Finger (85) aufweist, die auf dem Fingeraufnahmeteil (80) drehbar und in einem Winkel gegenüber der Radialrichtung ausgerichtet sind, und auf dem koaxialen Teil (78) der Mitnehmerteil (70) drehbar angeordnet ist und zur Führung der Finger dient, dadurch gekennzeichnet, daß der Fingeraufnahmeteil (80) eines jeden Rotors (32, 34) im Bereich des Einzugsgehäuseteils (48) exzentrisch verläuft und das Erntegut von den Fingern (85) nur für einen bestimmten Zeitabschnitt erfaßt wird, in dem das Erntegut stromabwärts gefördert wird.

5. Mähdrescher nach einem oder mehreren der vorherigen Ansprüche, dadurch gekennzeichnet, daß die Fingerspitzen (87) der Finger (85) im Bereich des Erntegutaufnahmeteils eine schräg gestellte Kreisebene überstreichen und das Erntegut intermittierend stromabwärts fördern.

6. Mähdrescher nach einem oder mehreren der vorherigen Ansprüche, dadurch gekennzeichnet, daß die Exzentrizität der Fingeraufnahmeteile (80) der Rotoren (32, 34) im Einzugsgehäuseteil (48) in Richtung des zwischen den Rotoren liegenden Zwischenraumes bzw. der Förderzone (124) verläuft und die beiden Rotationskreise der Fingerspitzen (87) mit Bezug auf die Längsachse der Rotoren (32, 34) schräg verlaufen und dicht nebeneinander liegen.

7. Mähdrescher nach einem oder mehreren der vorherigen Ansprüche, dadurch gekennzeichnet, daß an der Innenwand des Einzugsgehäuseteils (48) sich axial erstreckende, als Leitelemente ausgebildete Rippen vorgesehen sind.

8. Mähdrescher nach einem oder mehreren der vorherigen Ansprüche, dadurch gekennzeichnet, daß die Fingeraufnahmeteile (80) im Einzugsgehäuseteil (48) mit Bezug auf die Fingeraufnahmeteile der Rotoren (32, 34) im Trennteil derart radial versetzt angeordnet sind, daß der Abstand der Fingeraufnahmeteile (80) im Einzugsgehäuseteil kleiner ist als der Abstand der Fingeraufnahmeteile im Trennteil.

9. Mähdrescher nach einem oder mehreren der vorherigen Ansprüche, dadurch gekennzeichnet, daß beide Fingeraufnahmeteile der Rotoren (32, 34) im Einzugsgehäuseteil (48) und im Trennteil jeweils zum Gehäuseteil exzentrisch angeordnet sind.

10. Mähdrescher nach einem oder mehreren der vorherigen Ansprüche, dadurch gekennzeichnet, daß jeweils die gegenüberliegenden Seitenwände (50, 52) des Einzugsgehäuseteils über einen gewölbten Boden (54) verbunden sind.

11. Mähdrescher nach einem oder mehreren der vorherigen Ansprüche, dadurch gekennzeichnet, daß der Durchmesser des Einzugsgehäuseteils (48) gleich dem Durchmesser des Gehäuses der Trennvorrichtung (28) ist und die Seitenwände (50, 52) von Einzugsgehäuseteil und Trennvorrichtung durchgehend ausgebildet sind.

12. Mähdrescher nach einem oder mehreren der vorherigen Ansprüche, dadurch gekennzeichnet, daß die Breite der Einlaßöffnung (40) in etwa gleich dem Abstand zwischen den Fingeraufnahmeteilen (80) der Rotoren (32, 34) im Einzugsgehäuseteil (48) ist.

13. Mähdrescher nach einem oder mehreren der vorherigen Ansprüche, dadurch gekennzeichnet, daß der Durchmesser des Rotationskreises der Fingerspitzen (87) im Einzugsgehäuseteil (48) größer ist als der Durchmesser des Rotationskreises in der Trennvorrichtung (28) bzw. umgekehrt.

14. Mähdrescher nach einem oder mehreren der vorherigen Ansprüche, dadurch gekennzeichnet, daß die am stromabwärts liegenden Ende vorgesehene, den Einzugsgehäuseteil (48) von der Trennvorrichtung (28) abteilende Wand (58) rechtwinklig und quer zu den Achsen der Rotoren (32, 34) angeordnet ist.

15. Mähdrescher nach Anspruch 14, dadurch gekennzeichnet, daß die hintere quer verlaufende Wand (58) zwei den zylinderförmig ausgebildeten Wänden (50, 52) angepaßte Ausschnitte aufweist.

16. Mähdrescher nach einem oder mehreren der vorherigen Ansprüche, dadurch ·gekennzeichnet, daß der Durchmesser des Einzugsgehäuseteils (48) größer ist als der Durchmesser des Gehäuses des Trennteils.

17. Mähdrescher nach einem oder mehreren der vorherigen Ansprüche, dadurch gekennzeichnet, daß der Rotationskreis der Finger (85) im Bereich des Trennteils dicht über dem Boden (54") liegt bzw. tangential an diesen angrenzt, während der Rotationskreis der Finger (85) im Einzugsgehäuseteil (48) des einen Rotors (32) an den Rotationskreis des anderen Rotors tangential angrenzt oder diesen etwas überlappt.

18. Mähdrescher nach einem oder mehreren der vorherigen Ansprüche, dadurch gekennzeichnet, daß der Boden (54') zwischen den Rotationskreisen der Finger (85) eine Erhebung (128) aufweist, deren rechter und linker Abschnitt einen kurvenförmigen Verlauf mit einem Kurvenradius aufweist, der etwas größer ist als der Radius des entsprechenden Rotationskreises.

19. Mähdrescher nach einem oder mehreren der vorherigen Ansprüche, dadurch gekennzeichnet, daß die Rotationskreise der Finger (85) im Einzugsgehäuseteil einen größeren Abstand aufweisen als Rotationskreise im Trennteil.

## Claims

1. Combine harvester with a harvesting device and a separating device (28) operating according to the axial flow principle, having at least one forward inlet opening (40) and a rear outlet opening (42), and which is formed from two-separator housings (30) arranged next to one another, each with a rotatably mounted rotor (32, 34), of which each comprises a shaft with numerous rotating fingers (85), so that the harvested material is moved spirally along the inner surfaces of the separator housings (30) to the outlet opening (42) and the harvested material is delivered through the inlet opening to an intake housing part (48) provided at the forward end of the separating device, into which housing part each rotor (32, 34) extends, which housing part is formed from semi-cylindrical or approximately semi-cylindrical side walls (50, 52) and at least one transversely running forward wall (52), characterized in that the two rotors (32, 34) are arranged in the intake housing part (48) in a common space, which is formed from the semi-cylindrical side walls (50, 52) around the two rotors, from a continuous bottom (54), the transversely extending forward wall (56) as well as the transversely running rear wall (58) dividing the harvested material into two material streams, wherein the bottom (54) together with the rotors forms a conveying zone (124) lying between the rotors, in which the harvested material is conveyed by the oppositely driven rotors and from which it is fed separately to the two separate separator housings (32) lying next to each other.

2. Combine harvester according to claim 1, characterized in that the inlet opening (40) is formed from two upper edges (59, 60) of the side walls (50, 52) extending in the axial direction of the rotor and two upper edges of the transversely running walls (56, 58), which are so arranged spaced from one another that the harvested material is fed by means of the intermittently acting fingers (85) between the rotors (32, 34) into the conveying zone radially from above and is then fed spirally to the separator housings (30).

3. Combine harvester according to claim 1 or 2, characterized in that the downstream intake housing part (48) is formed from two approximately semi-cylindrical cylinders adjacent one another, which are connected by the horizontally running bottom (54).

4. Combine harvester according to one or more of the preceding claims, wherein each rotor (32, 34) consists of a crankshaft (74), which comprises a coaxial part (78) and a finger receiving part (80) radially offset relative thereto, and of an entrainment part (70), wherein the finger receiving part comprises the fingers (85), which extend from the finger receiving part (80) rotatably through an angle relative to the radial direction, and the entrainment part (17) is rotatably arranged on the coaxial part (78) and serves to guide the fingers, characterized in that the finger receiving part (80) of each rotor (32, 34) runs eccentrically in the region of the intake housing part (48) and engages the harvested material from the fingers (85) only for a predetermined interval of time, in which the harvested material is conveyed downstream.

5. Combine harvester according to one or more of the preceding claims, characterized in that the finger tips (85) of the fingers (85) describe an obliquely disposed circular plane in the region of the harvested material receiver part and convey the harvested material intermittently downstream.

6. Combine harvester according to one or more of the preceding claims, characterized in that the eccentricity of the finger receiving part (80) of the rotors (32, 34) in the intake housing part (48) extends in the direction of the intermediate space or the conveying zone (124) lying between the rotors and the two circles of rotation of the fingers tips (87) run obliquely relative to the longitudinal axes of the rotors (32, 34) and lie closely adjacent one another.

7. Combine harvester according to one or more of the preceding claims, characterized in that ribs formed as guide elements are provided on the inner wall of the intake housing part (48), extending axially.

8. Combine harvester according to one or more of the preceding claims, characterized in that the finger receiving part (80) is arranged radially displaced in the intake housing part (48) relative to the finger receiving part of the rotors (32, 34) in the separating part, so that the spacing of the finger receiving parts (80) in the intake housing part is smaller than the spacing of the finger receiving parts in the separating part.

9. Combine harvester according to one or more of the preceding claims, characterized in that both finger receiving parts of the rotors (32, 34) in the intake housing part (48) and in the separating part are each arranged eccentrically relative to the housing part.

10. Combine harvester according to one or more of the preceding claims, characterized in that each of the opposed side walls (50, 52) of the intake housing part are connected by an arched bottom (54).

11. Combine harvester according to one or more of the preceding claims, characterized in that the diameter of the intake housing part (48) is equal to the diameter of the housing of the separating device (28) and the side walls (50, 52) of the intake housing part and separating device are formed continuously.

12. Combine harvester according to one or more of the preceding claims, characterized in that the width of the inlet opening (40) is approximately equal to the spacing between the finger receiving parts (80) of the rotors (32, 34) in the intake housing part (48).

13. Combine harvester according to one or more of the preceding claims, characterized in that the diameter of the circle of rotation of the finger tips (87) in the intake housing part (48) is larger than the diameter of the circle of rotation in the separating device (28) or conversely.

14. Combine harvester according to one or more of the preceding claims, characterized in that the wall (58) provided at the downstream lying end to partition the intake housing part (48) from the separating device (28) is arranged at right angles and transverse to the axes of the rotors (32, 34).

15. Combine harvester according to claim 14, characterized in that the rear transversely running wall (58) comprises two sections matched to the two walls (50, 52) formed cylindrically.

16. Combine harvester according to one or more of the preceding claims, characterized in that the diameter of the intake housing part (48) is greater than the diameter of the housing of the separating part.

17. Combine harvester according to one or more of the preceding claims, characterized in that the circle of rotation of the fingers (85) in the region of the separating part lies close to the bottom (54″) or borders tangentially thereon, while the circle of rotation of the fingers (85) in the intake housing part (48) of the one rotor (32) borders tangentially on the circle of rotation of the other rotor or somewhat overlaps this.

18. Combine harvester according to one or more of the preceding claims, characterized in that the bottom (54′) between the circles of rotation of the fingers (85) has a protuberance (128), whose right and left sections have a curvilinear course with a radius of curvature which is somewhat greater than the radius of the corresponding circle of rotation.

19. Combine harvester according to one or more of the preceding claims, characterized in that the circles of rotation of the fingers (85) in the intake housing part have a greater spacing than the circles of rotation in the separator part.

## Revendications

1. Moissonneuse-batteuse comportant un ensemble de récolte et un dispositif de séparation (28) fonctionnant selon le principe du flux axial, comportant au moins un orifice d'admission antérieur (40) et un orifice d'évacuation postérieur (42), qui comprend deux carters de séparation contigus (30) comportant chacun un rotor (32, 34) monté de façon à pouvoir tourner, dont chacun comporte un bras pourvu de nombreux doigts rotatifs (85), de sorte que les produits de récolte sont déplacés en spirale en un tapis le long de la surface intérieure du carter de séparation (30) vers l'orifice d'évacuation (42) et les produits de récolte sont transférés, par l'intermédiaire de l'orifice d'admission, dans une partie de carter d'introduction (48) prévue à l'extrémité antérieure du dispositif de séparation, dans laquelle s'étend chaque rotor (32, 34) respectif, qui est constituée par des parois latérales (50, 52) semi-cylindriques ou sensiblement semi-cylindriques et au moins une paroi antérieure (56) dirigée transversalement, caractérisée en ce que, dans la partie de carter d'introduction (48), les deux rotors (32, 34) sont placés dans un compartiment commun qui est formé par les parois latérales semi-circulaires (50, 52) entourant les deux rotors, un fond continu (54), la paroi antérieure (56) dirigée transversalement, ainsi que la paroi postérieure (58) dirigée transversalement, subdivisant les produits de récolte en deux courants de produits, le fond (54) formant, avec les rotors, une zone de transport (124) située entre les rotors, dans laquelle les produits de récolte sont amenés par les rotors pouvant être entraînés en sens contraire et de laquelle ils sont amenés séparément aux deux carters de séparation (30) séparés contigus.

2. Moissonneuse-batteuse suivant la revendication 1, caractérisée en ce que l'orifice d'admission (40) est formé par deux bords supérieurs (59, 60) des parois latérales (50, 52) s'étendant dans la direction axiale du rotor et deux bords supérieurs des parois (56, 58) dirigées transversalement, qui sont disposés à une distance mutuelle telle que les produits de récolte sont introduits, au moyen des doigts (85) à fonctionnement intermitent, entre les rotors (32, 34) dans la zone de transport radialement par le haut, puis amenés en spirale aux carters de séparation (30).

3. Moissonneuse-batteuse suivant la revendication 1 ou 2, caractérisée en ce que la partie de carter d'introduction (48) située en amont comprend deux cylindres sensiblement semi-circulaires bout à bout qui sont reliés par le fond horizontal (54).

4. Moissonneuse-batteuse suivant une ou plusieurs des revendications précédentes, chaque rotor (32, 34) comprenant un arbre coudé (74) qui comporte une partie coaxiale (78) et une partie de réception de doigts (80) décalée radialement par rapport à elle, et une partie d'entraînement (70), la partie de réception de doigts comportant les doigts (85) qui sont orientés sur la partie de réception de doigts (80) de façon à pouvoir tourner et suivant un angle par rapport à la direction radiale, et sur la partie coaxiale (78), la partie d'entraînement (70) étant disposée de façon à pouvoir tourner et servant à guider les doigts, caractérisée en ce que la partie de réception des doigts (80) de chaque rotor (32, 34) s'étend excentriquement au voisinage de la partie de carter d'introduction (48), et les produits de récolte sont interceptés par les doigts (85) seulement pendant un intervalle de temps déterminé au cours duquel les produits de récolte sont transportés vers l'aval.

5. Moissonneuse-batteuse suivant une ou plusieurs des revendications précédentes, caractérisée en ce que les bouts (87) des doigts (85) balayent, dans la zone de la partie de réception de produits de récolte, un plan de cercle oblique et transportent les produits de récolte de façon intermittente vers l'aval.

6. Moissonneuse-batteuse suivant une ou plusieurs des revendications précédentes, caractérisée en ce que l'excentricité des parties de réception de doigts (80) des rotors (32, 34) est dirigée dans la partie de carter de réception (48), en direction de l'intervalle compris entre les rotors ou de la zone de transport (124), et les deux cercles de rotation des bouts de doigts (87) sont dirigés obliquement par rapport à l'axe longitudinal des rotors (32, 34) et sont tout près l'un de l'autre.

7. Moissonneuse-batteuse suivant une ou plusieurs des revendications précédentes, caractérisée en ce que des nervures conformées en éléments de guidage, s'étendant axialement, sont prévues sur la paroi intérieure de la partie de carter d'introduction (48).

8. Moissonneuse-batteuse suivant une ou plusieurs des revendications précédentes, caractérisée en ce que les parties de réception de doigts (80) sont disposées dans la partie de carter d'introduction (48) par rapport aux parties de réception de doigts des rotors (32, 34) dans la partie de séparation avec un décalage radial tel que la distance des parties de réception de doigts (80) dans la partie de carter d'introduction est inférieure à la distance des parties de réception de doigts dans la partie de séparation.

9. Moissonneuse-batteuse suivant une ou plusieurs des revendications précédentes, caractérisée en ce que les deux parties de réception de doigts des rotors (32, 34) sont disposées chaque fois excentriquement par rapport à la partie de carter dans la partie de carter d'introduction (48) et dans la partie de séparation respectivement.

10. Moissonneuse-batteuse suivant une ou plusieurs des revendications précédentes, caractérisée en ce que les parois latérales opposées (50, 52) de la partie de carter d'introduction sont reliées chacune par un fond bombé (54).

11. Moissonneuse-batteuse suivant une ou plusieurs des revendications précédentes, caractérisée en ce que le diamètre de la partie de carter d'introduction (48) est égal au diamètre du carter du dispositif de séparation (28), et en ce que les parois latérales (50, 52) de la partie de carter d'introduction et du dispositif de séparation ont une conformation continue.

12. Moissonneuse-batteuse suivant une ou plusieurs des revendications précédentes, caractérisée en ce que la largeur de l'orifice d'admission (40) est à peu près égale à la distance entre les parties de réception de doigts (80) des rotors (32, 34) dans la partie de carter d'introduction (48).

13. Moissonneuse-batteuse suivant une ou plusieurs des revendications précédentes, caractérisée en ce que le diamètre du cercle de rotation des bouts de doigts (87) dans la partie de carter d'introduction (48) est supérieur au diamètre du cercle de rotation dans le dispositif de séparation (28), ou inversement.

14. Moissonneuse-batteuse suivant une ou plusieurs des revendications précédentes, caractérisée en ce que la paroi (58) prévue à l'extrémité aval, séparant la partie de carter d'introduction (48) du dispositif de séparation (28), est disposée à angle droit et transversalement aux axes des rotors (32, 34).

15. Moissonneuse-batteuse suivant la revendication 14, caractérisée en ce que la paroi postérieure transversale (58) comporte deux sections adaptées aux parois (50, 52) de conformation cylindrique.

16. Moissonneuse-batteuse suivant une ou plusieurs des revendications précédentes, caractérisée en ce que le diamètre de la partie de carter d'introduction (48) est supérieur au diamètre du carter de la partie de séparation.

17. Moissonneuse-batteuse suivant une ou plusieurs des revendications précédentes, caractérisée en ce que le cercle de rotation des doigts (85) dans la zone de la partie de séparation se trouve juste au-dessus du fond (54'') ou en est contigu tangentiellement, tandis que le cercle de rotation des doigts (85) dans la partie de carter d'introduction (48) de l'un des rotors (32) est contigu tangentiellement au cercle de rotation de l'autre rotor ou le chevauche sensiblement.

18. Moissonneuse-batteuse suivant une ou plusieurs des revendications précédentes, caractérisée en ce que le fond (54') comporte entre les cercles de rotation des doigts (85) un réhaussement (128) dont la section de droite et de gauche présente une allure incurvée avec un rayon de courbure un peu supérieur au rayon du cercle de rotation correspondant.

19. Moissonneuse-batteuse suivant une ou plusieurs des revendications précédentes, caractérisée en ce que les cercles de rotation des doigts (85) dans la partie de carter d'introduction présentent une plus grande distance que les cercles de rotation dans la partie de séparation.

*Fig. 1*

*Fig. 2*

Fig. 3

Fig. 4

Fig. 5a

Fig. 5b

Fig. 5c

Fig. 6

Fig. 7

Fig. 8